# EUROPEAN PATENT SPECIFICATION

(11) **EP 2 219 320 B1**
(45) Date of publication and mention of the grant of the patent: **12.08.2015**
(21) Application number: 10153308.1
(22) Date of filing: 11.02.2010
(51) Int. Cl.: H04L 12/12

(54) **System and method for managing data between control point and at least one device in digital living network alliance system**
System und Verfahren zur Verwaltung von Daten zwischen einem Kontrollpunkt und mindestens einer Vorrichtung in einem digital belebten Netzwerkverbandsystem
Système et procédé de gestion des données entre un point de contrôle et au moins un dispositif dans le système d'alliance de réseau vivant numérique

(30) Priority: 11.02.2009 KR 20090010976
(43) Date of publication of application: 18.08.2010
(73) Proprietor: Samsung Electronics Co., Ltd., Suwon-si, Gyeonggi-do, 443-742 (KR)
(72) Inventor: Kim, Chul-Seung, Gyeonggi-do (KR); Yoon, Won-Shik, Gyeonggi-do (KR); Shin, Ho-Chul, Gyeonggi-do (KR)
(74) Representative: Grünecker Patent- und Rechtsanwälte PartG mbB

(56) References cited:
- US-A1- 2004 264 397
- US-A1- 2009 016 323
- DIMITRIS N KALOFONOS ET AL: "A Network Connectivity Power-Saving Mechanism for Mobile Devices in DLNA Home Networks" CONSUMER COMMUNICATIONS AND NETWORKING CONFERENCE, 2007. CCNC 2007. 20 07 4TH IEEE, IEEE, PI, 1 January 2007 (2007-01-01), pages 645-649, XP031087863 ISBN: 978-1-4244-0667-8

## Description

### BACKGROUND OF THE INVENTION

### 1. Field of the Invention

The present invention relates to a system and method for managing data between a control point and at least one device in a Digital Living Network Alliance (DLNA) system, and more particularly relates to a system and method for managing data between a control point and at least one device in DLNA system so that the control point supporting a sleep-mode can efficiently manage each device.

### 2. Description of the Related Art

Digital Living Network Alliance (DLNA) refers to a standard organization of digital information technology products founded to develop the standard that makes data such as music, moving images and still images compatible by interconnecting appliances such as digital Audio Visual (AV) appliances and Personal Computers (PCs) in a home network. In digital home network environments, consumers require, watch and manage numerous digital content, especially media content such as photographs, music and moving images, and the consumer desires, watch and manage content in various types of appliances including Consumer Electrics (CE), mobile devices and personal computers. Also, the consumers require convenient use of the content in a different appliance or a different place within their home regardless of the source of the content.

To accomplish this result, the DLNA defines the home network as a combination of a PC internet network (e.g. a PC, a printer, etc.), a mobile telecommunication network (e.g. Personal Digital Assistants (PDAs), mobile phones, laptops, etc.) and a consumer electrics network (e.g. a TeleVision (TV), a stereo, a Digital Video Disk (DVD) player, etc.), and the DLNA attempts to provide compatibility (or interoperability) through three kinds of modes, such as: 1) cooperation between major enterprises, 2) the standardization of a compatible framework, and 3) products designed based on 1) and 2). Also, the DLNA has been standardizing a physical media, network transmission, a media format, a streaming protocol, Digital Rights Management (DRM) or the like, based on Universal Plug and Play (UPnP) technology.

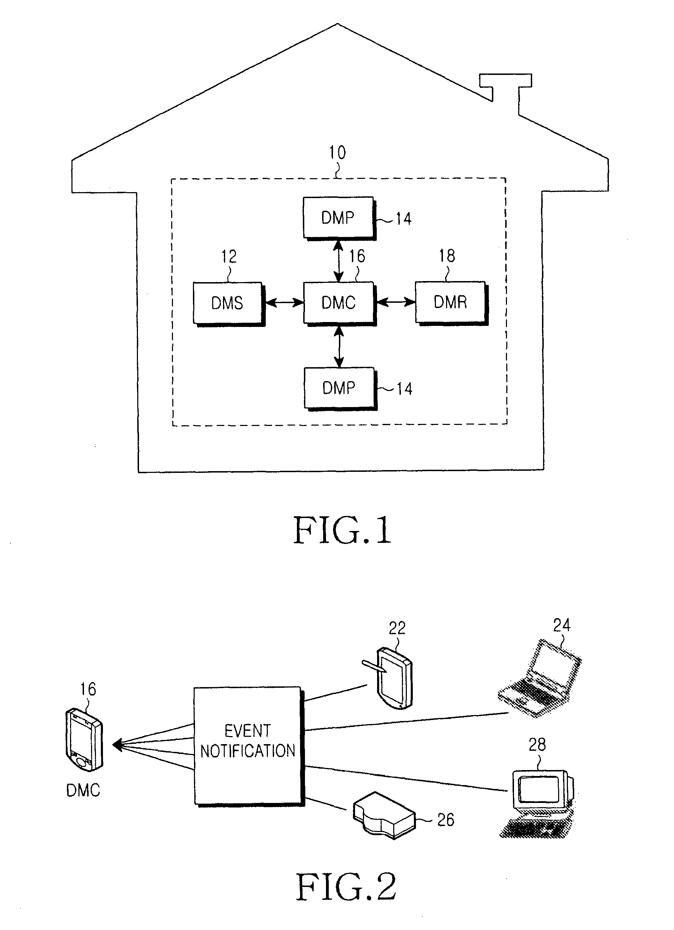

FIG. 1 is a diagram illustrating the construction of a DLNA system according to a prior art technology. The DLNA system 10 of FIG. 1 is based on the UPnP, which is a wired and wireless network system, which includes a Digital Media Server (DMS)12, a Digital Media Player (DMP) 14, a Digital Media Controller (DMC) 16 and a Digital Media Renderer (DMR) 18.

DMS 12, DMP 14 and DMC 16 include a Mobile-Digital Media Server (M-DMS), a Mobile-Digital Media Player (M-DMP) and a Mobile-Digital Media Controller (M-DMC), that are portable. The M-DMS, M-DMP, M-DMC, or the like, can be directly connected to the DLNA system 10, or may be connected to the DLNA system through an Access Point (AP). The AP has an Mobile-Network Connection Function (M-NCF) as an intermediary node for connecting the M-DMS to the M-DMP.

The DLNA system 10 can configure a home network using a wired network (e.g. an Institute Electrical and Electronic Engineers (IEEE) 802.3 network) or a wireless network (e.g. an Institute Electrical and Electronic Engineers (IEEE) 802.11 standard based system). DMS 12, DMP 14 and DMR 18 in the home network can also configure a home network using a wired network (e.g. an Institute Electrical and Electronic Engineers (IEEE) 802.3 standard based system) or a wireless network (e.g. an Institute Electrical and Electronic Engineers (IEEE) 802.11 standard based system). In addition, the DMS 12, the DMP 14 and the DMR 16 on the home network may be interconnected via a wired network or a wireless network. Digital appliances in the home network are capable of transmitting data such as an image and a sound based on protocols based on, for example, an IEEE 1394 standard.

In particular, the interconnection standard of home network appliances is referred to as a 'DLNA guideline', which is a standardization task of the DLNA system 10, and has divided a device part of the DLNA system 10 into the DMS 12, the DMP 14, the DMC 16 or the DMR 18, and prescribed connection conditions between the DMS 12 and the DMP 14, the DMC 16 or the DMR 18.

The DMS 12 performs the function of a Media Server Device (MSD) in a UPnP AV area, that is, the DMS 12 provides digital media content, and a major purpose of the DMS 12 enables a CP (Control Point ), that is a User Interface (UI application), to retrieve a digital media content item in the DMS so that a DLNA network user can display and distribute the content. The DMS 12 mounts a broadcast receiving apparatus and a broadcast middle ware for receiving a digital broadcast, and the DMS 12 can include a Video Cassette Recorder (VCR), a Compact Disk (CD) player, a DVD player, a Moving Picture experts group-1 audio layer 3 (MP3) player, a Set Top Box (STB), a TV tuner, a radio tuner, a PC, or the like.

The DMR 18 is responsible for running selected media, including a TV, and AV appliances, such as a stereo speaker, a fountain controlled by music, etc.

The DMP 14 is a DMRcontaining a control point, which performs the functions of a Media Renderer Device (MRD) and a Media Renderer Control Point (MRCP), that is, the DMP 14 selects and controls media content and executes the selected media content.

In this DLNA system 10, an appliance included in the DLNA system periodically informs the DMC 16 of its state-related information. Such a function is referred to as 'Event Notification', and the event notification occurs periodically or intermittently. The DMC 16 contains a list of appliances included in the network, that is a Subscriber List, and updates the corresponding-related information (e.g., appliance-related state information) whenever an event notification is received. FIG. 2 is a diagram illustrating that each appliance in the prior art DLNA system informs the DMC of an event. In FIG. 2, the DMC 16 receives an event notification from each of appliances 22, 24, 26 and 28.

However, if the DMC 16 switches into a sleep mode, or is temporarily incapable of receiving an event notification, the DMC 16 cannot properly reflect the state of appliances included in the network due to missing events. Therefore, a way of informing a sleep-mode supporting DMC of appliances' events is needed.

US2009/0016323 A1 refers to a system, method and apparatus for maintaining call state information for real time call sessions.

US2004/0264397 A1 refers to a power saving mechanism for periodic traffic streams in wireless local area networks.

The publication titled "A Network Connectivity Power-Saving Mechanism for Mobile Devices in DLNA Home Networks" by Dimitris N. Kalofonos et al, Consumer Communications and Networking Conference, dated January 1, 2007, pages 645 to 649, ISBN: 978-1-4244-0667-8, provides a mechanism that exposes an bearer independent interface that allows higher level entities to take advantage of a link-level low-power support without requiring bearer-dependent implementations.

### Summary of the Invention

It is the object of the present invention to provide an improved method for managing data between a control point and at least one device in a DLNA system so that the control point supporting a sleep mode can efficiently manage each device and the system.

This object is solved by the subject matter of the independent claims.

Preferred embodiments are defines by the dependent claims.

In accordance with an aspect of the present invention, there is provided a method for managing data between in a control point and at least one device in a Digital Living Network Alliance (DLNA) system wherein the control point and the at least one device are included in the DLNA. The method includes generating a sleep-mode entry message and transmitting the sleep-mode entry message to the at least one device before the control point enters into a sleep mode; storing event information of an event when the event occurs in the at least one device; generating a sleep mode release message and transmitting the sleep-mode release message to the at least one device when the control point releases the sleep mode; and transmitting the event information to the control point by the device storing the event information.

In accordance with another aspect of the present invention, there is provided a device managing method for managing at least one device by a control point in a DLNA system wherein the control point and the at least one device are included in the DLNA. The method includes generating a sleep-mode entry message when entering into a sleep mode; and transmitting the sleep-mode entry message to the at least one device.

In accordance with yet another aspect of the present invention, there is provided a DLNA system. The system includes a control point designed to generate a sleep-mode entry message and transmit the sleep-mode entry message to at least one device before entry into a sleep mode and said at least one device designed to receive the sleep-mode entry message from the control point and store event information of the corresponding event when an event occurs.

### BRIEF DESCRIPTION OF THE DRAWINGS

The above and other aspects, features and advantages of the present invention will be more apparent from the following detailed description taken in conjunction with the accompanying drawings, in which:
FIG. 1 is a diagram illustrating the construction of the prior art DLNA system;
FIG. 2 is a diagram illustrating that each appliance of the prior art DLNA system informs an MCP of an event;
FIG. 3 is a block diagram illustrating a DLNA system according to an embodiment of the present invention;
FIG. 4 is a flow chart illustrating a method of managing each device when a control point of the DLNA system enters into a sleep mode according to an embodiment of the present invention;
FIG. 5 is a flow chart illustrating a method of managing each device when a control point of the DLNA system releases the sleep mode according to an embodiment of the present invention; and
FIG. 6 is a diagram illustrating a control point and devices in the DLNA system according to an embodiment of the present invention.

### DESCRIPTION OF EMBODIMENTS OF THE INVENTION

Hereinafter, embodiments of the present invention will be described in detail with reference to the accompanying drawings. In the drawings, the same elements will be designated by the same reference numerals. Further, in the following description and the accompanied drawings of the present invention, a detailed description of known functions and components incorporated herein will be omitted when it may make the subject matter of the present invention rather unclear.

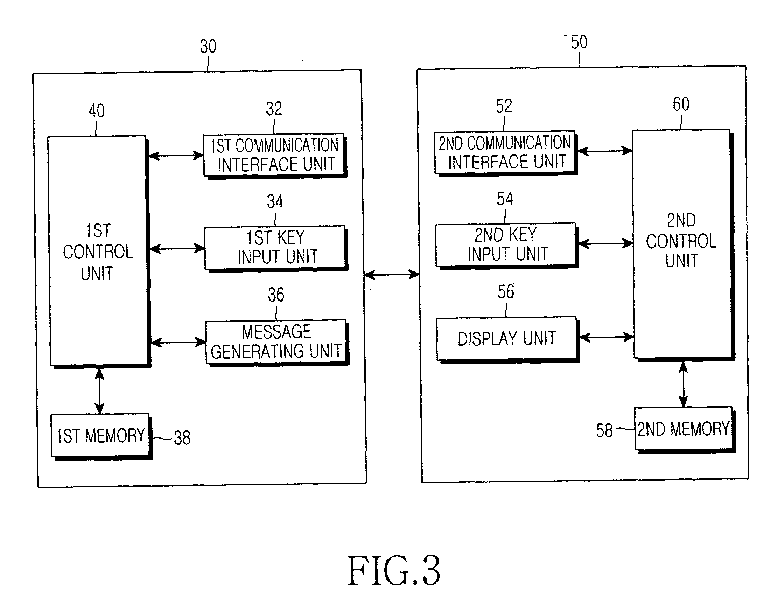

FIG. 3 is a block diagram illustrating a DLNA system according to an embodiment of the present invention.

The DLNA system includes a control point 30 and at least one device 50. The control point 30 can manage and control all devices registered in the DLNA system, and the device 50 can add, delete and display specific content under the control of the control point 30. Also, the control point 30 can transmit a sleep-mode entry message to each device 50 before the control point 30 enters into a sleep mode, and the control point 30 may transmit a sleep-mode release message right after the sleep mode is released. Through this, the device 50 can recognize whether the control point 30 has entered into the sleep mode, and therefore, the device 50 can determine whether to transmit to the control point 30 event-related information occurring during the sleep mode.

'Sleep Mode' means that the control point 30 enters into, for example, a maximum power saving mode. The control point 30 cannot receive event information from the device 50 in the sleep mode. By setting a sleep mode, the control point 30 can save power if there is no key input from a user.

The control point 30 includes a first communication interface unit 32, a first key input unit 34, a message generating unit 36, a first memory 36 and a first control unit 40.

The first communication interface unit 32 communicates with the device 50. The first communication interface unit 32 can transmit a sleep-mode entry message or a sleep-mode release message to each device 50. The first communication interface unit 32 can transmit the sleep-mode entry/release message to each device 50 in either a unicast or a multicast fashion.

The first key input unit 34 has keys capable of receiving numbers and characters and keys for setting each kind of function to receive an input from the user. The first key input unit 34 can receive user input from a user, wherein the user input commands that the control point 30 should enter into the sleep mode or a preset sleep mode should be released.

The message generating unit 36 may generate a sleep-mode entry message or a sleep-mode release message. The sleep-mode entry message refers to a message indicating that the control point 30 enters into a sleep mode, and the sleep-mode release message indicates that the control point 30 has released the sleep mode.

The sleep-mode entry/release message has a General Event Notification Architecture (GENA) format as defined in the UPnP, and fields as shown in Table 1 below can be added in the header.

**Table 1**

| Header | Value | |
|---|---|---|
| SLEEPMODE | ON/OFF | mandatory |
| MAXWAITTIME | | Optional |

Referring to Table 1, a sleep-mode entry message identifying entry into a sleep mode has a header in which Value of SLEEP MODE is 'ON' or '1', . When Value of SLEEP MODE is 'OFF' or '0', the message is a sleep-mode release message identifying the release from the sleep mode. 'MAXWAITTIME' is a maximum time for remaining in the sleep mode of the control point 30. At this time, the SLEEP MODE field is a mandatory item, and the MAXWAITTIME field is an optional item.

In addition, Table 2 sets forth an example of a sleep-mode entry message, and Table 3 sets forth an example of a sleep-mode release message.

**Table 2**

| |
|---|
| SUBSCRIBE *publisher path HTTP*/*1.1* |
| HOST: *publisher host:publisher port* |
| CALLBACK: *<delivery URL>* |
| NT: *upnp:event* |
| TIMEOUT: *Second-requested subscription duration* |
| SLEEPMODE: ON |

**Table 3**

| |
|---|
| SUBSCRIBE *publisher path HTTP*/*1.1* |
| HOST: *publisher host:publisher port* |
| CALLBACK: *<delivery URL>* |
| NT: *upnp:event* |
| TIMEOUT: *Second-requested subscription duration* |
| SLEEPMODE: OFF |
| MAXWAITTIME: 100 |

Referring to Tables 2 and 3, 'SLEEPMODE: ON' indicates that the control point 30 enters a sleep mode. Also, 'SLEEP MODE: OFF' indicates that the control point 30 releases the sleep mode, and the value of 'MAXWAITTIME: 100' indicates that a maximum time that a control point 30 maintains a sleep mode is '100 seconds'.

The first memory 38 includes a program memory and a data memory. The first memory 38 stores information necessary for controlling the operation of the control point 30. The first memory 38 can store a sleep-mode entry/release message to be transmitted to each device 50 and can store event information transmitted from each device 50.

The first control unit 40 controls the general operation of the control point 30. The first control unit 40 controls the first communication interface unit 32 to transmit the sleep-mode entry/release message to each device 50. To do this, the first control unit 40 controls the message generating unit 36 to generate a sleep-mode entry/release message.

In addition, the first control unit 40 determines if the control point 30 has entered a sleep mode, or if the control point 30 releases the sleep mode. When the control point 30 enters into the sleep mode, the first control unit 40 controls the message generating unit 36 so as to generate a sleep-mode entry message. Likewise, when the control point 30 releases the sleep mode, the first control unit 40 controls the message generating unit 36 so as to generate a sleep-mode release message.

When no key input is received through the first key input unit 34 for more than a predetermined time pre-stored in the first memory 38, the first control unit 40 switches the control point 30 into the sleep mode. Also, even while the control point 30 performs a sleep mode, the control unit 30 can release the sleep mode when a key input through the first key input unit 34 is received. The first control unit 40 sets or releases a sleep mode in an aforementioned way and, at each time of setting or releasing the sleep mode, determines that the control point 30 enters in the sleep mode or is releasing the sleep mode.

According to another embodiment, the first control unit 40 can control the control point 30 to maintain a sleep mode for a predetermined time pre-stored in the first memory 38. That is, the first control unit 40 can determine a time that the control point 30 maintains a sleep mode as the predetermined time pre-stored in the first memory 38. At this time, the control point 30 should release the sleep mode after the predetermined time pre-stored in the first memory 38 has elapsed.

The device 50 includes a second communication interface unit 52, a second key input unit 54, a display unit 56, a second memory 58 and a second control unit 60.

The second communication interface unit 52 performs the communication function of the device 50. The second communication interface unit 52 receives a sleep-mode entry/release message transmitted from the control point 30. Also, the second communication interface unit 52 transmits to the control point 30 event information that occurs in the device 50.

The second key input unit 54 has keys capable of receiving numbers and characters and keys for setting each kind of function to receive an input from a user.

The display unit 56 displays content stored within the device 50 under the control of the second control unit 60.

The second memory 58 includes a program memory and a data memory as in the first memory 38. The second memory 58stores information necessary for controlling the operation of the device 50. The second memory 58 stores a sleep-mode entry/release message transmitted from the control point 30. Also, when an event occurs within the device 50, the second memory 58 stores corresponding event information.

The second control unit 60 controls the general operation of the device 50. When the second control unit 60 receives a sleep-mode entry message through the second communication interface unit 52, the second control unit 60 confirms that the control point 30 enters into a sleep mode, by analyzing the sleep-mode entry message. When the control point 30 is in the sleep mode, the second control unit 60 controls the device 50 so that when an event occurs in the device 50, the device 50 does not transmit the corresponding event information to the control point 30. At this time, the second control unit 60 stores the event information in the second memory 58.

Also, when the second control unit 60 receives a sleep-mode release message from the control point 30, the second control unit 60 determines if event information stored in the second memory 58 is the newest version. The control unit 60 allows the control point 30 to maintain the newest information regarding each device 50 by transmitting the newest event information to the control point 30.

According to another embodiment, when an event occurs within the device 50, the second control unit 60 can generate event information regarding the corresponding event and store the event information in the second memory 58. At this time, the generated event information can be information identifying adding, deleting or performing other actions of content stored in the second memory 58 in the device 50.

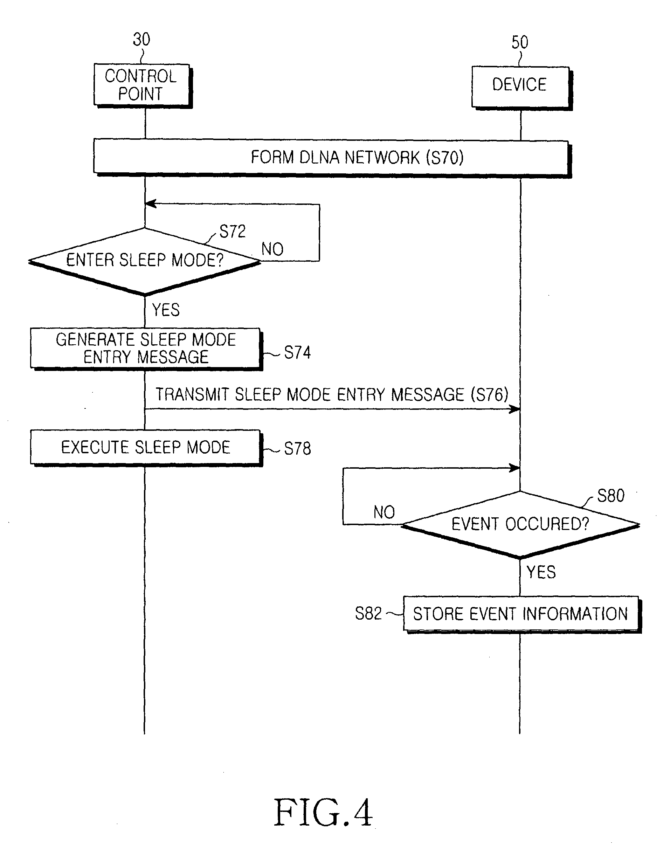

FIG. 4 is a flow chart of a method of managing each device when a control point of the DLNA system enters into a sleep mode according to an embodiment of the present invention.

First, it is assumed that the control point 30 and at least one device 50 form a DLNA network in step S70.

The first control unit 40 determines if the control point 30 enters a sleep mode in step S72. An entry into the sleep-mode can be determined according to whether a maximum standby time waiting for a user input through the first key input unit 34 exceeds a predetermined value stored in the first memory 38. Supposing that 60 seconds of a maximum standby time is stored in the first memory 38, the control unit 40 determines that the control point 30 enters into the sleep mode when it is determined that the standby time is greater than 60 seconds.

As a determination result of step S72, when the control point 30 does not enter a sleep-mode ('NO' in step S72), the first control unit 40 maintains the current state of the control point 30 (e.g., a standby state). On the other hand, as a determination result of step S72, when the control point 30 enters into the sleep mode ('YES' in step S72), the message generating unit 36 generates a sleep-mode entry message in step S74.

When a sleep-mode message is generated, the first communication interface unit 32 transmits a sleep-mode entry message to the device 50 in step S76. At this time, the first control unit 40 of the control point 30 can control the first communication interface unit 32 to transmit the sleep-mode entry message to all devices 50 in the DLNA system in a unicast or multicast fashion. Afterwards, the control point 30 executes the sleep mode in step S78.

In step S76, the second communication interface unit 52 of the device 50 receives the sleep-mode entry message transmitted from the control point 30. Afterwards, the second control unit 60 of the device 50 determines if an event occurred in step S80. The event can be, for example, the addition, deletion or other actions of content stored in the second memory 58.

As a determination result of step S80, when an event does not occur ('NO' in step S80), the device 50 remains in the current state (e.g., a standby state). On the other hand, when an event occurs ('YES' in step S80), the second control unit 60 generates event information of the event and stores the event information in the second memory 58 in step S82.

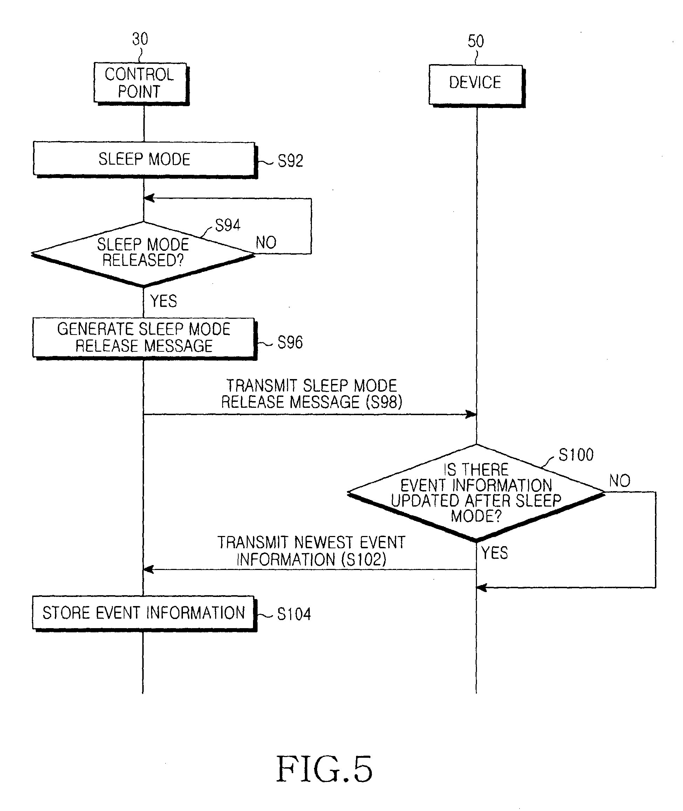

FIG. 5 is a flow chart of a method of managing each device when a control point of the DLNA system releases the sleep mode according to an embodiment of the present invention.

First, it is assumed that the control point 30 is in a sleep mode in step S92. The first control unit 40 of the control point 30 determines if the control point 30 has released the sleep mode in step S94. The release of the sleep-mode can be done, for example, if a user input is received through the first key input unit 34. Also, if the control point 30 intends to maintain the sleep mode for only a predetermined time stored in the first memory 38, the release of the sleep-mode is done after the predetermined time has elapsed.

As a determination result of step S94, when the sleep mode has not been released ('NO' in step S94), the control point 30 does not perform any other operation. On the other hand, when the sleep mode has been released ('YES' in step S94), the message generating unit 36 generates a sleep-mode release message in step S96. The control point 30 transmits the sleep-mode release message to the device 50 through the first communication interface unit 32. When the sleep-mode release message is received, the second control unit 60 of the device 50 determines if updated event information exists, event information that occurred after the sleep mode of the control point 30 in step S100.

If the control point 30 is in the execution of the sleep mode, the control point 30 cannot receive event information when the device 50 transmits the event information to the control point 30. Therefore, when the control point 30 is in the sleep mode, the device 50 does not transmit the event information to the control point 30 but stores the event information in the second memory 58. Because the control point 30 cannot receive event information regarding each device 50 while the control point 30 is in the sleep mode, the control point 30 should receive event information regarding each device 50 and maintain the newest information regarding the corresponding device 50 when the sleep mode is released.

As a determination result of step S 100, when information updated after the sleep mode does not exist ('NO' in step S100), the device 50 does not perform any other operation and can maintain the current state. If there is no event occurring in the device while the control point performs the sleep mode, related event information is also not generated. Therefore, the device 50 may not transmit event information to the control point 30. Because information that the control point 30 has regarding the device 50 (e.g., a content list) is the same as the one that existed prior to entering the sleep mode, the control point 30 already has the newest information regarding the device 50. Therefore, in the case of the device 50 that no event occurred, event information may not be transmitted to the control point 30 even when the control point 30 has released the sleep mode.

As a determination result of step S100, if there exists information updated after the sleep mode ('YES' in step S100), the device 50 transmits the newest event information to the control point 30 in step S102. When the newest event information from the device 50 is received, the control point 30 stores the event information in step S104. Since event information is capable of informing the control point 30 of the current state of the device 50 transmitting the event information, it is preferable to transmit the newest event information to the control point 30.

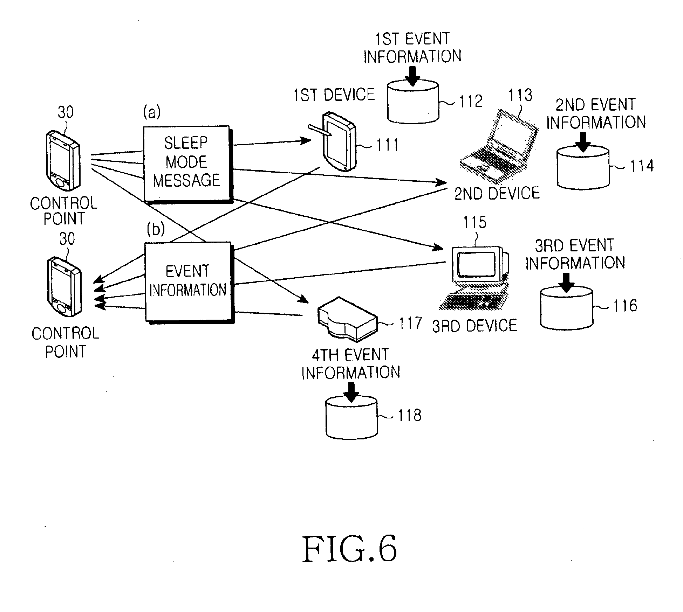

FIG. 6 is a diagram illustrating a control point and devices in the DLNA system according to an embodiment of the present invention.

In reference to FIG. 6, the reference number (a) shows the control point 30 and devices 111, 113, 115 and 117. In FIG. 6, the DLNA system includes one control point 30, a first device 111, a second device 113, a third device 115 and a fourth device 117. Also, each device 111, 113, 115 and 117 may have a respective storage 112, 114, 116 and 118. Thus, when the control point 30 enters into the sleep mode, each device 111, 113, 115, 117 can store event information regarding each device 111, 113, 115, 117 in each storage 112, 114, 116, 118, respectively. At this time, the stored event information is designated as a first event information, a second event information, a third event information, and a fourth event information in FIG. 6.

The reference numeral (b) shows the control point 30 and devices 111, 113, 115, 117. When the sleep mode is released, the control point 30 receives event information from each device 111, 113, 115, 117. At this time, each event information is assumed to be the newest event information in each corresponding device 111, 113, 115, 117. When the sleep mode is released and the control point 30 transmits a sleep-mode release message to each device 111, 113, 115, 117, device 111, 113, 115, 117 transmits the first event information, the second event information, the third event information and the fourth event information, respectively, to the control point 30.

The present invention provides a method of managing data between a control point and at least one device in a DLNA system and the system so that the control point supporting a sleep mode can manage each device efficiently.

According to the present invention, the control point transmits a sleep-mode entry message to each device in advance before the control point enters into the sleep mode so that each device can easily recognize the current state of the control point (i.e. sleep mode). Each device already knows that the control point is in a sleep mode. By doing this, each device does not need to transmit event information of an event to a control device even if the event occurs while the control point is in the sleep mode, thereby reducing power consumption.

The control point receives from each device the newest version of event information regarding the corresponding device, wherein the event occurred in said each device after the sleep mode, so that control point can easily recognize the current state of each device.

While the invention has been shown and described with reference to certain exemplary embodiments thereof, it will be understood by those skilled in the art that various changes in form and details may be made therein without departing from the scope of the invention as defined by the appended claims.

## Claims

1. A method of managing data between a control point (30) and at least one device (50) in a Digital Living Network Alliance, DLNA, system, the control point (30) and the at least one device (50) being included in the DLNA system, comprising the steps of:
generating (S74), by the control point, a sleep-mode entry message;
transmitting (S76), by the control point, the sleep mode entry message to the at least one device (50) before the control point (30) enters into a sleep mode;
generating (S96), by the control point, a sleep-mode release message when the control point (30) releases the sleep mode;
transmitting (398), by the control point, the sleep-mode release message to the at least one device (50) after the control point (30) releases the sleep mode; and
receiving, by the control point, event information comprising information of events of adding, deleting or other actions of content, said event information being generated during the sleep mode by the at least one device (50).

2. The data management method of claim 1, further comprising storing (S82) the event information by the at least one device when an event occurs.

3. The data management method of claim 2, wherein said event information is stored when the event occurs.

4. The data management method of one of claim 1 to 3, wherein the control point (30) enters into the sleep mode if a user input has not been received for more than a pre-stored time.

5. The data management method of any one of claims 1 to 4, wherein the control point (30) enters into the sleep mode by receiving a user input to enter into the sleep mode.

6. The data management method of any one of claims 1 to 5, further comprising :
determining (S100), by the device (50), whether event information is updated after entry into the sleep mode, when the sleep-mode release message is transmitted from the control point (30); and
transmitting (S102) the updated event information to the control point (30) by the device (50).

7. The data management method of any one of claims 1 to 6, wherein the sleep-mode is released if the sleep mode has been performed for more than a pre-stored time.

8. The data management method of any one of claims 1 to 7, wherein the sleep mode is released if a user input to release the sleep mode is received.

9. A Digital Living Network Alliance, DLNA, system, comprising:
a control point (30) designed to generate a sleep-mode entry message and transmit the sleep-mode entry message to at least one device (50) before entry into a sleep mode and then enter into the sleep mode; and to generate a sleep-mode release message when the control point releases the sleep mode, and to transmit the sleep-mode release message to the at least one device (50) after the sleep mode is released, wherein the control point (30) is further designed to receive event information comprising information of adding, deleting or other actions of contents;
said at least one device (50) designed to receive the sleep-mode entry message from the control point (30), to store event information comprising information of events of adding, deleting or other actions of content when an event occurs, to receive the sleep-mode release message from the control point (30) and when it is determined that an event information update took place during the sleep mode, to transmit said event information to the control point (30).

10. The DLNA system of claim 9, wherein the control point (30) is further designed to enter into the sleep mode if a user input has not been received for more than a pre-stored time.

11. The DLNA system of claim 9 or 10, wherein the control point (30) is further designed to enter into the sleep mode when a user input to enter into the sleep mode is received.

## Patentansprüche

1. Verfahren zum Verwalten von Daten zwischen einem Steuerpunkt (30) und wenigstens einer Vorrichtung (50) in einem DLNA-System (Digital Living Network Alliance DLNA, digitaler belebter Netzwerkverbund), wobei der Steuerpunkt (30) und die wenigstens eine Vorrichtung (50) in dem DLNA-System beinhaltet sind, umfassend die nachfolgenden Schritte:
durch den Steuerpunkt erfolgendes Erzeugen (S74) einer Ruhemoduseintrittsmitteilung;
durch den Steuerpunkt erfolgendes Übertragen (S76) der Ruhemoduseintrittsmitteilung an die wenigstens eine Vorrichtung (50), bevor der Steuerpunkt (30) in einen Ruhemodus eintritt;
durch den Steuerpunkt erfolgendes Erzeugen (S96) einer Ruhemodusfreigabemitteilung, wenn der Steuerpunkt (30) den Ruhemodus freigibt;
durch den Steuerpunkt erfolgendes Übertragen (S98) der Ruhemodusfreigabemitteilung an die wenigstens eine Vorrichtung (50), nachdem der Steuerpunkt (30) den Ruhemodus freigibt; und
durch den Steuerpunkt erfolgendes Empfangen einer Ereignisinformation, die Information über Ereignisse eines Hinzufügens, Löschens oder anderer Aktionen am Inhalt umfasst, wobei die Ereignisinformation während des Ruhemodus von der wenigstens einen Vorrichtung (50) erzeugt wird.

2. Datenverwaltungsverfahren nach Anspruch 1, des Weiteren umfassend ein Speichern (S82) der Ereignisinformation durch die wenigstens eine Vorrichtung, wenn ein Ereignis auftritt.

3. Datenverwaltungsverfahren nach Anspruch 2, wobei die Ereignisinformation gespeichert wird, wenn das Ereignis auftritt.

4. Datenverwaltungsverfahren nach einem von Anspruch 1 bis 3, wobei der Steuerpunkt (30) in den Ruhemodus eintritt, wenn für mehr als eine vorgespeicherte Zeit keine Anwendereingabe empfangen worden ist.

5. Datenverwaltungsverfahren nach einem der Ansprüche 1 bis 4, wobei der Steuerpunkt (30) in den Ruhemodus durch Empfangen einer Anwendereingabe zum Eintreten in den Ruhemodus eintritt.

6. Datenverwaltungsverfahren nach einem der Ansprüche 1 bis 5, des Weiteren umfassend:
durch die Vorrichtung (50) erfolgendes Bestimmen (S100), ob eine Ereignisinformation nach Eintritt in den Ruhemodus aktualisiert wird, wenn die Ruhemodusfreigabemitteilung von dem Steuerpunkt (30) empfangen wird; und
Übertragen (S102) der aktualisierten Ereignisinformation an den Steuerpunkt (30) durch die Vorrichtung (50).

7. Datenverwaltungsverfahren nach einem der Ansprüche 1 bis 6, wobei der Ruhemodus freigegeben wird, wenn der Ruhemodus für mehr als eine vorgespeicherte Zeit durchgeführt worden ist.

8. Datenverwaltungsverfahren nach einem der Ansprüche 1 bis 7, wobei der Ruhemodus freigegeben wird, wenn eine Anwendereingabe zum Freigeben des Ruhemodus empfangen wird.

9. DLNA-System (Digital Living Network Alliance DLNA, digitaler belebter Netzwerkverbund), umfassend:
einen Steuerpunkt (30), der ausgelegt ist zum Erzeugen einer Ruhemoduseintrittsmitteilung und Übertragen der Ruhemoduseintrittsmitteilung an wenigstens eine Vorrichtung (50) vor Eintritt in einen Ruhemodus und zum sodann erfolgenden Eintreten in den Ruhemodus; und zum Erzeugen einer Ruhemodusfreigabemitteilung, wenn der Steuerpunkt den Ruhemodus freigibt, und zum Übertragen der Ruhemodusfreigabemitteilung an die wenigstens eine Vorrichtung (50), nachdem der Ruhemodus freigegeben ist, wobei der Steuerpunkt (30) des Weiteren ausgelegt ist zum Empfangen einer Ereignisinformation, die Information über ein Hinzufügen, Löschen oder andere Aktionen an Inhalten umfasst;
die wenigstens eine Vorrichtung (50) ausgelegt ist zum Empfangen der Ruhemoduseintrittsmitteilung von dem Steuerpunkt (30), zum Speichern einer Ereignisinformation, die Information über Ereignisse eines Hinzufügens, Löschens oder andere Aktionen am Inhalt umfasst, wenn ein Ereignis auftritt, zum Erzeugen der Ruhemodusfreigabemitteilung von dem Steuerpunkt (30) und zum dann, wenn bestimmt wird, dass eine Ereignisinformationsaktualisierung während des Ruhemodus
stattgefunden hat, erfolgenden Übertragen der Ereignisinformation an den Steuerpunkt (30).

10. DLNA-System nach Anspruch 9, wobei der Steuerpunkt (30) des Weiteren ausgelegt ist zum Eintreten in den Ruhemodus, wenn für mehr als eine vorgespeicherte Zeit keine Anwendereingabe empfangen worden ist.

11. DLNA-System nach Anspruch 9 oder 10, wobei der Steuerpunkt (30) des Weiteren ausgelegt ist zum Eintreten in den Ruhemodus, wenn eine Anwendereingabe zum Eintreten in den Ruhemodus empfangen wird.

## Revendications

1. Procédé de gestion de données entre un point de contrôle (30) et au moins un dispositif (50) dans un système d'alliance de réseau vivant numérique, DLNA, le point de contrôle (30) et l'au moins un dispositif (50) étant inclus dans le système DLNA, comprenant les étapes consistant à :
générer (S74) au moyen du point de contrôle un message d'entrée dans un mode de veille ;
transmettre (S76) au moyen du point de contrôle le message d'entrée dans le mode de veille à l'au moins un dispositif (50) avant que le point de contrôle entre dans le mode de veille ;
générer (S96) au moyen du point de contrôle un message de sortie du mode de veille, lorsque le point de contrôle (30) sort du mode de veille ;
transmettre (S98) au moyen du point de contrôle le message de sortie du mode de veille à l'au moins un dispositif (50) après que le point de contrôle (30) a fait sortir du mode de veille ; et
recevoir au moyen du point de contrôle des informations d'événement comprenant des informations d'événement d'addition, suppression ou autres actions sur le contenu, lesdites informations étant générées pendant le mode de veille par l'au moins un dispositif (50).

2. Procédé de gestion de données selon la revendication 1, comprenant en outre la mémorisation (S82) des informations d'événement par l'au moins un dispositif lorsqu'un événement se produit.

3. Procédé de gestion de données selon la revendication 2, dans lequel lesdites informations d'événement sont mémorisées lorsque l'événement se produit.

4. Procédé de gestion de données selon l'une des revendications 1 à 3, dans lequel le point de contrôle (30) entre dans le mode de veille si aucune entrée d'utilisateur n'a été reçue pendant un temps supérieur à une durée mémorisée à l'avance.

5. Procédé de gestion de données selon l'une quelconque des revendications 1 à 4, dans lequel le point de contrôle (30) entre dans le mode de veille lorsqu'il reçoit une entrée d'utilisateur pour entrer dans le mode de veille.

6. Procédé de gestion de données selon l'une quelconque des revendications 1 à 5, comprenant en outre :
la détermination (S100) au moyen du dispositif (50) du fait que des informations d'événement sont mises à jour après entrée dans le mode de veille, lorsque le message de sortie du mode de veille est transmis par le point de contrôle (30) ; et
la transmission (S102) par le dispositif (50) au point de contrôle (30) des informations d'événement mises à jour.

7. Procédé de gestion de données selon l'une quelconque des revendications 1 à 6, dans lequel on sort du mode de veille si le mode de veille a été exécuté pendant un temps supérieur à une durée mémorisée à l'avance.

8. Procédé de gestion de données selon l'une quelconque des revendications 1 à 7, dans lequel on sort du mode de veille si une entrée d'utilisateur pour sortir du mode de veille est reçue.

9. Système d'alliance de réseau vivant numérique, DLNA, comprenant :
un point de contrôle (30) conçu pour générer un message d'entrée dans un mode de veille et pour transmettre le message d'entrée dans le mode de veille à au moins un dispositif (50) avant entrée dans le mode de veille, puis entrer dans le mode de veille ; et pour générer un message de sortie du mode de veille lorsque le point de contrôle fait sortir du mode de veille, et pour transmettre le message de sortie du mode de veille à l'au moins un dispositif (50) après sortie du mode de veille, dans lequel le point de contrôle (30) est conçu en outre pour recevoir des informations d'événement comprenant des informations d'événement d'addition, suppression ou autres actions sur le contenu ;
ledit au moins un dispositif (50) étant conçu pour recevoir le message d'entrée dans le mode de veille depuis le point de contrôle (30), mémoriser les informations d'événement comprenant des informations d'événement d'addition, suppression ou autres actions sur le contenu, lorsqu'un événement se produit, recevoir le message de sortie du mode de veille depuis le point de contrôle (30), et lorsqu'il a été déterminé qu'une mise à jour d'informations d'événement se produit pendant le mode de veille, transmettre lesdites informations d'événement au point de contrôle (30).

10. Système DLNA selon la revendication 9, dans lequel le point de contrôle (30) est conçu en outre pour entrer dans le mode de veille si aucune entrée d'utilisateur n'a été reçue pendant un temps supérieur à une durée mémorisée à l'avance.

11. Système DLNA selon la revendication 9 ou 10, dans lequel le point de contrôle (30) est conçu en outre pour entrer dans le mode de veille lorsqu'une entrée d'utilisateur pour entrer dans le mode de veille est reçue.
